# NOUVEAU FASCICULE DE BREVET EUROPEEN

(11) **EP 0 423 865 B2**
(45) Date de publication et mention de la décision concernant l'opposition: **07.07.1999**
(45) Mention de la délivrance du brevet: 07.09.1994
(21) Numéro de dépôt: 90202626.9
(22) Date de dépôt: 03.10.1990
(51) Int. Cl.: H01M 4/42, C22C 18/00, C22C 18/04

(54) **Pile electrochemique contenant une anode en alliage de zinc**
Elektrochemische Batterie mit einer Anode aus einer Zinklegierung
Electrochemical battery with a zinc alloy anode

(30) Priorité: 20.10.1989 BE 8901130
(43) Date de publication de la demande: 24.04.1991
(73) Titulaire: n.v. UNION MINIERE s.a., B-1200 Bruxelles (BE)
(72) Inventeur: Skenazi, André, B-3030 Heverlee (BE); Strauven, Yvan A.J., B-3580 Neerpelt (BE); Baert, Franck G.G.G, B-3583 Overpelt (BE)
(74) Mandataire: Saelemaekers, Juul

(56) Documents cités:
- SU-A- 394 446
- US-A- 1 421 686
- US-A- 1 421 686
- Fuso Metals 2, 178-82 (1950), Takemichi Otsu, Zinc used for dry cells, et traduction
- Gmelin (1956), page 333
- Ullmann Bd. 24, 1983, page 622
- V. E. Dmitrenko et al., Electrotrechniskaya promiehlenost. Ser. Chimitch I. Fysitcheskie isotochniki toka, 1981, (6), pages 14 et 15 et traduction
- Hydrogen Overpotential on Zinc Alloys nin Alkaline Solution, J. Electrochem. Soc., Vol. 122, no. 2, février 1973, pages 171 à 173
- Influence du manganèse sur les propriétés mécaniques du zinc de haute pureté, J. Hérenguel, Métaux, Corrosion, Usure, Vol. XVII, no. 208, décembre 1942, pages 215 et 216
- Zinc, C. H. Mathewson, Reinhold Publishing Corp., New-York, 1959, pages 388 et 389
- Metall, 37ème année, cahier 9, septembre 1983, pages 898 et 901
- La metallurgia italiana, no. 12, 1961, pages 645 et 674 et traduction du résumé.

## Description

La présente invention se rapporte à une pile électrochimique contenant une anode en alliage de zinc, plus particulièrement à la composition de l'alliage de zinc dont l'anode est faite.

Un alliage de zinc connu pour godets de piles contient, outre du zinc et des impuretés inévitables, 0,2-0,3 % de plomb et 0.05-0,07 % de cadmium (par zinc on entend ici et ci-après du zinc raffiné thermiquement ou électrolytiquement, et par % pourcentage en poids). Cet alliage connu a l'inconvénient de contenir l'élément toxique Cd. En outre, il a une teneur élevée en plomb, qui, bien que beaucoup moins toxique que le cadmium, représente cependant un certain danger pour l'environnement.

Un autre alliage de zinc connu pour godets de piles contient, outre du zinc et des impuretés inévitables, seulement 0.4-0,8 % de plomb. Cet alliage ne contient certes pas de cadmium mais sa résistance mécanique est inférieure à celle de l'alliage au cadmium et, en outre, sa teneur en plomb est supérieure à celle de ce dernier.

La but de la présente invention est de fournir un alliage de zinc pour une anode pour une pile électrochimique, qui ne contient pas de cadmium et peu ou pas de plomb et qui, pourtant, a une résistance mécanique et une résistance à la corrosion suffisante.

L'alliage selon l'invention est exempt de cadmium et il contient moins de 0,05 % de Pb et 0,005 %-1 % de Mn.

Les autres composants de l'alliage selon l'invention sont soit du zinc et les "impuretés inévitables, soit du zinc, les impuretés inévitables et des faibles quantités d'autres éléments, comme par exemple 0,01-0,02 % d'In. Les impuretés inévitables sont les impuretés, qui sont présentes dans le zinc ou dans les éléments, qui sont ajoutés au zinc pour l'obtention de l'alliage. Aussi, l'expression ci-dessus "L'alliage selon l'invention est exempt de cadmium" doit se comprendre comme suit : l'alliage selon l'invention est exempt de cadmium à moins qu'il soit éventuellement présent comme impureté inévitable.

En rapport avec la teneur en plomb de l'alliage selon l'invention, il faut remarquer que maintenant la demanderesse, d'une façon surprenante, a trouvé, au contraire de ce qu'elle pensait autrefois, qu'un alliage de zinc contenant 0,005-1 % de Mn, ne doit pas contenir 0,05 % de Pb ou davantage afin qu'on puisse le mettre en oeuvre sans difficultés. Aussi, la teneur en plomb de l'alliage selon l'invention s'élève à moins de 0,05 %, puisque le plomb constitue un danger pour l'environnement. L'alliage peut donc aussi être exempt de plomb, bien entendu pour autant que le plomb ne soit pas présent comme impureté inévitable, par exemple dans le zinc.

la teneur en manganèse doit s'élever au moins à 0,005 %; sinon la résistance mécanique et la résistance à la corrosion sont insuffisantes. La teneur en manganèse ne peut dépasser 1 %, puisqu'en cas de teneurs plus élevées en manganèse des composés intermétalliques Zn-Mn sont formés, qui peuvent donner lieu à des fissures lors du laminage de l'alliage. La teneur en manganèse s'élève de préférence à 0,01-0,1 %.

Il est à noter ici que US-A-1,421,686 mentionne que la dureté et la résistance au pliage du zinc augmentent quand on allie le zinc avec 0,5-4 % de Mn et qu'un tel alliage peut être substitué au cuivre, au laiton et au bronze. Cet enseignement ne suggère pas que cet alliage pourrait être utilisé pour fabriquer des anodes pour piles électrochimiques.

### Exemple 1

La description ci-après d'un essai comparatif démontre qu'un alliage de zinc avec 0,05 % de Mn ne doit pas contenir 0,05 % de Pb ou davantage afin de pouvoir le mettre en oeuvre sans difficultés.

En partant de zinc raffiné thermiquement (1) neuf alliages ont été préparés dont la composition se présente comme suit:
(2) Zn - 0 % Pb - 0,05 % Mn
(3) Zn - 0,05 % Pb - 0% Mn
(4) Zn - 0,05 % Pb - 0,05 % Mn
(5) Zn - 0,10 % Pb - 0 % Mn
(6) Zn - 0,10 % Pb - 0,05 % Mn
(7) Zn - 0,15 % Pb - 0 % Mn
(8) Zn - 0,15 % Pb - 0,05 % Mn
(9) Zn - 0,20 % Pb - O % Mn
(10) Zn - 0,20 % Pb - 0,05 % Mn

Le zinc raffiné thermiquement (1) et les neuf alliages (2) - (10) ont été transformés en godets d'une manière traditionnelle dans une installation industrielle : le produit coulé a été laminé en bandes, hors desquelles sont poinçonnées des pastilles de forme hexagonale; et les pastilles ont été extrudées en godets.

La résistance à la traction (en MPa) a été déterminée sur des éprouvettes découpées de la paroi du godet selon la direction de l'extrusion; la vitesse de traction s'élevait à 1 cm/min.

Egalement sur des éprouvettes, découpées de la paroi du godet selon la direction de l'extrusion, l'indice de pliage a été déterminé, l'indice de pliage étant le nombre de coups jusqu'à la rupture avec une charge de 7 MPa et 1 coup par seconde.

Les résultats de ces mesures sont regroupés dans le tableau 1.

**Tableau 1**

| Composition | Résistance à la traction MPa | Elongation % | Indice de pliage |
|---|---|---|---|
| (1) | 123 | 20 | 10 |
| (2) | 177 | 38 | 12 |
| (3) | 130 | 19 | 7 |
| (4) | 177 | 39 | 16 |
| (5) | 131 | 17 | 10 |
| (6) | 180 | 37 | 15 |
| (7) | 140 | 28 | 12 |
| (8) | 185 | 35 | 15 |
| (9) | 148 | 34 | 14 |
| (10) | 172 | 34 | 16 |

Il ressort de ces résultats que la résistance à la traction, l'élongation et l'indice de pliage, et donc également l'usinabilité, sont à peine ou pas influencés par la diminution de la teneur en plomb pour l'alliage avec manganèse. C'est bien le cas avec les alliages binaires Zn-Pb, pour lesquels une résistance diminuée est observée.

### Exemple 2

Cet exemple démontre que la résistance mécanique et la résistance à la corrosion d'une anode pour piles électrochimiques selon l'invention sont substantiellement équivalentes à celles d'une anode faite d'un alliage de zinc connu contenant du cadmium et plus de 0,05 % de plomb.

En partant de zinc raffiné thermiquement deux alliages ont été préparés dont la composition se présente comme suit:
(11) Zn - 0,025 % Pb - 0,05 % Mn
(12) Zn - 0,25 % Pb - 0.06 % Cd

De la même façon que dans l'exemple 1 ces alliages ont été transformés on godets et leur résistance à la traction déterminée. Les résultats sont regroupés dans le tableau 2.

**Tableau 2**

| Composition | Résistance à la traction MPa | Elongation % |
|---|---|---|
| (11) | 185,6 | 39,2 |
| (12) | 179,4 | 37,1 |

Pour déterminer la résistance à la corrosion on a utilisé un électrolyte industriel de ZnCl₂. Dans un premier essai 5 godets de chaque alliage ont été immergés pendant 14 jours dans l'électrolyte que l'on maintient a 45°C. Dans un deuxième essai 5 godets également de chaque alliage ont été immergés pendant 65 jours dans l'électrolyte que l'on maintient maintenant à la température ambiante.
Après l'immersion les godets ont été examinés par microscopie. On a constaté que les alliages (11) et (12) sont absolument équivalents en ce qui concerne leur résistance à la corrosion par piqûres.

Les alliages (2) et (11) sont des alliages selon l'invention. D'autres exemples typiques d'alliages selon l'invention ont la composition suivante :
Zn - 0,025 % Pb - 0,05 % Mn
Zn - 0,01 % Mn
Zn - 0,1 % Mn
Zn - 0,015 % Pb - 0,01 % Mn
Zn - 0,025 % Pb - 0,01 % Mn
Zn - 0,035 % Pb - 0,01 % Mn
Zn - 0,015 % Pb - 0,1 % Mn
Zn - 0,025 % Pb - 0,1 % Mn
Zn - 0,035 % Pb - 0,1 % Mn
Zn - 0,015 % Pb - 0,05 % Mn
Zn - 0,035 % Pb - 0,05 % Mn

Lors de la préparation de ces alliages on part de zinc raffiné thermiquement ou électrolytiquement.

## Revendications

1. Pile électrochimique contenant une anode en alliage de zinc en forme de godet, caractérisée en ce que l'anode est exempte de cadmium et qu'elle contient moins de 0,05 % de Pb, 0,005-1 % de Mn et facultativement 0,01-0,02 % d'In, les autres composants de l'alliage étant constitués par du zinc raffiné thermiquement ou électrolytiquement et les impuretés inévitables.

2. Pile électrochimique selon la revendication 1, caractérisée en ce que l'anode contient 0,01-0,1 % de Mn

3. Pile électrochimique selon une des revendications 1 ou 2, caractérisée en ce que l'anode contient jusqu'à 0,035 % de Pb.

4. Pile électrochimique selon une des revendications 1 à 3, caractérisée en ce que l'anode contient jusqu'à 0,025 % de Pb.

5. Pile électrochimique selon une des revendications 1 à 4, caractérisée en ce que l'anode contient jusqu'à 0,015 % de Pb.

6. Pile électrochimique selon une des revendications 1 à 5, caractérisée en ce que l'anode est exempte de Pb.

## Claims

1. Electrochemical battery containing a zinc alloy anode in cup form, characterized in that the anode is free from cadmium and contains less than 0.05% of Pb, 0.005-1% of Mn and optionally 0.01-0.02% of In, the other alloy components consisting of thermally or electrolytically refined zinc and the inevitable impurities.

2. Electrochemical battery according to claim 1, characterized in that the anode contains 0.01-0.1% of Mn.

3. Electrochemical battery according to one of the claims 1 or 2, characterized in that the anode contains up to 0.035% of Pb.

4. Electrochemical battery according to one of the claims 1-3, characterized in that the anode contains up to 0.025% of Pb.

5. Electrochemical battery according to one of the claims 1-4, characterized in that the anode contains up to 0.015% of Pb.

6. Electrochemical battery according to one of the claims 1-5, characterized in that the anode is free from lead.

## Patentansprüche

1. Elektrochemische Batterie mit einer Anode aus einer Zinklegierung in Form eines Bechers, dadurch gekennzeichnet, dass die Anode frei von Cadmium ist und weniger als 0.05% Pb, 0.005-1% Mn und gegebenenfalls 0.01-0.02% In enthält, die anderen Legierungskomponenten bestehend aus thermisch oder elektrolytisch raffiniertem Zink und den unvermeidlichen Verunreinigungen.

2. Elektrochemische Batterie nach Anspruch 1, dadurch gekennzeichnet, dass die Anode 0.01 bis 0.1% Mn enthält.

3. Elektrochemische Batterie nach einem der Ansprüche 1 oder 2, dadurch gekennzeichnet, dass die Anode bis zu 0.035% Pb enthält.

4. Elektrochemische Batterie nach einem der Ansprüche 1 bis 3, dadurch gekennzeichnet, dass die Anode bis zu 0.025% Pb enthält.

5. Elektrochemische Batterie nach einem der Ansprüche 1 bis 4, dadurch gekennzeichnet, dass die Anode bis zu 0.015% Pb enthält.

6. Elektrochemische Batterie nach einem der Ansprüche 1 bis 5, dadurch gekennzeichnet, dass die Anode frei von Pb is.
